## Europäisches Patentamt

## European Patent Office

## Office européen des brevets

(19)

(11) **EP 0 587 249 B1**

(12)

# FASCICULE DE BREVET EUROPEEN

(45) Date de publication et mention
de la délivrance du brevet:
**17.12.1997 Bulletin 1997/51**

(51) Int Cl.$^6$: **H04B 7/204**

(21) Numéro de dépôt: **93202609.9**

(22) Date de dépôt: **07.09.1993**

(54) **Procédé de reconfiguration de couvertures de faisceau d'antenne dans un réseau par satellite**

Rekonfigurationsverfahren des Bestrahlungsfeldes einer Antenne in einem Satellitennetz

Process for reconfiguration of antenna beam coverage in a satellite network

(84) Etats contractants désignés:
**DE GB IT**

(30) Priorité: **11.09.1992 FR 9210871**

(43) Date de publication de la demande:
**16.03.1994 Bulletin 1994/11**

(73) Titulaire: **FRANCE TELECOM**
**75015 Paris (FR)**

(72) Inventeurs:
• **Cances, Jean-Pierre**
**F-31000 Toulouse (FR)**
• **Maral, Gérard**
**F-31120 Goyrans (FR)**
• **Coulomb, Bernard**
**F-31100 Toulouse (FR)**
• **Lenormand, Régis**
**F-31700 Blagnac (FR)**

(74) Mandataire: **Cabinet Martinet & Lapoux**
**BP 405**
**78055 Saint Quentin en Yvelines Cédex (FR)**

(56) Documents cités:
**EP-A- 0 395 239**

## Description

La présente invention concerne de manière très générale des télécommunications entre des stations émettrices-réceptrices terriennes par l'intermédiaire d'un satellite.

Plus précisément, l'invention a trait à un procédé de reconfiguration de couvertures de faisceau radioélectrique de satellite afin de gérer dynamiquement des couvertures de faisceau en fonction de requêtes des stations terriennes, tout en maintenant des couvertures de faisceau de taille minimale pour satisfaire un bilan de puissance au sein du satellite. Les couvertures radioélectriques du satellite sont reconfigurées en fonction des variations de trafic en volume et des positions de stations terriennes fixes ou mobiles utilisant le satellite comme relais radio-électrique. Cette reconfiguration adapte les ressources de la charge utile dans le satellite aux caractéristiques du trafic à chaque instant. L'invention est particulièrement bien adaptée au cas de trafic sporadique, tel que ceux générés par des stations VSAT (Very Small Aperture Terminal) ou des stations mobiles.

A l'origine, les satellites étaient conçus pour acheminer des communications d'un point à un autre, comme au moyen d'un câble, et la couverture étendue du satellite était mise à profit pour établir des liaisons à grande distance. Ainsi le satellite "Early Bird" reliait deux stations de part et d'autre de l'Océan Atlantique. En raison des performances limitées de ces satellites, il fallait utiliser des stations terriennes équipées de grandes antennes et donc de coût élevé. L'accroissement de la taille et de la puissance des satellites a permis par la suite de réduire la taille des stations terriennes, donc leur coût, et par conséquent d'en multiplier le nombre de ces stations. Une autre qualité du satellite liée à sa couverture étendue et donc à sa capacité de diffusion ou collecte a été ainsi mise à profit : au lieu de transmettre des signaux d'un point à un autre, un émetteur d'une station donnée peut émettre vers des récepteurs de stations en grand nombre via le satellite, ou inversement des stations en grand nombre peuvent émettre vers une station centrale.

Les premiers satellites conçus utilisent des antennes de type monofaisceau qui présentent certains inconvénients : soit le satellite assure la couverture d'une grande surface terrestre, mais le gain d'antenne du satellite est limité par l'angle d'ouverture du faisceau; soit le satellite assure la couverture d'une petite surface terrestre, et dans ce cas, le gain d'antenne est plus élevé mais le faisceau ne peut couvrir des stations trop distantes géographiquement. Ainsi, avec un satellite monofaisceau, il doit être choisi entre, d'une part, une couverture étendue mais avec un faible gain d'antenne, et donc des liaisons à taux d'erreur élevés, et d'autre part, une couverture réduite avec un gain d'antenne élevé mais ne permettant pas d'interconnecter des stations trop éloignées.

Les techniques d'antennes multifaisceaux concilient ces deux alternatives. La couverture du satellite est étendue car elle résulte de la juxtaposition de plusieurs faisceaux, et chaque faisceau offre un gain d'antenne d'autant plus élevé que l'ouverture du faisceau est réduite. Typiquement les antennes multifaisceaux à bord d'un satellite sont constituées d'éléments rayonnants, et associées respectivement à des réseaux de conformation de faisceau. Un réseau de conformation de faisceau alimentant les éléments rayonnants d'une antenne comprend en outre des déphaseurs et diviseurs de puissance permettant de configurer d'une manière particulière l'antenne associée. En réception autant qu'en émission, l'antenne est ainsi programmée pour des diagrammes de rayonnement particuliers. Un diagramme de rayonnement s'exprime notamment par un gain en fonction d'un angle par rapport à l'axe de l'antenne.

Selon la technique antérieure, deux procédés sont principalement utilisés dans le cadre d'un satellite multifaisceau.

Selon un premier procédé, dit "à faisceaux à balayage", des zones de couverture prédéterminées sont illuminées cycliquement par un même faisceau d'antenne dont l'orientation est commandée par des valeurs de commande particulières programmant un réseau de conformation de faisceau. Les stations situées dans une zone de couverture donnée n'émettent ou ne reçoivent des informations que lorsque ladite zone est illuminée par le faisceau. En l'absence d'une unité de mémorisation à bord du satellite, au moins deux faisceaux sont nécessaires à chaque instant : l'un pour établir une liaison montante des émetteurs des stations terriennes vers le satellite, et l'autre pour établir une liaison descendante du satellite vers les récepteurs des stations terriennes.

Selon un second procédé connu cf. p. ex. EP-A-0 395 239, il est proposé d'utiliser en réception et en émission un certain nombre de faisceaux respectifs et d'allouer des capacités variables respectives aux faisceaux par modification de bande passante dans chacun d'eux. Pour cela, il est réalisé une affectation dynamique des canaux de la charge utile entre les faisceaux en fonction de la demande de trafic dans ces faisceaux.

Ainsi, selon la technique antérieure, aucun procédé de reconfiguration de couvertures de faisceau n'existe pour satisfaire les demandes des stations terriennes en fonction des positions géographiques de ces dernières et des volumes de trafic. L'invention n'est pas basée sur le dernier procédé cité connu consistant en la modification de capacités pour des couvertures de faisceau prédéterminées, mais sur des modifications ou reconfigurations de couvertures radioélectriques de faisceaux au sol.

A cette fin, un procédé pour reconfigurer des couvertures de faisceau radioélectrique d'un satellite retransmettant des télécommunications échangées entre des stations terriennes émettrices-réceptrices, en modifiant des valeurs de commande en déphasage et puissance de moyens conformateurs de faisceau associés respectivement à des moyens rayonnants desdits faisceaux dans le satellite, à la fois en réception pour des télécommunications transmises par des stations terriennes vers le satellite et en émission pour des télécommunications retransmises par le satellite vers des stations terriennes, des canaux de télécommunications en nombre prédéterminé étant associés à chacune desdites couvertures de faisceau,

pour l'établissement d'une liaison de télécommunications entre l'une appelante desdites stations et une autre appelée desdites stations via le satellite, ledit procédé étant précédé par la transmission d'une requête d'établissement de ladite liaison de ladite station appelante vers une station de contrôle, via un canal de signalisation du satellite, est caractérisé en ce qu'il comprend, en simulation dans la station de contrôle, l'une de première et seconde alternatives séparément pour chacune desdites stations appelante et appelée, puis une étape finale ;

($a_1$) - ladite première alternative selon laquelle ladite chacune station n'est localisée dans aucune des couvertures de faisceau, comprenant les premières étapes suivantes :
($a_{10}$) - détermination parmi toutes lesdites couvertures de faisceau, d'une couverture la plus proche de ladite chacune station, et
($a_{11}$) - itérativement, réduction en dimension de chacune des couvertures autres que ladite couverture la plus proche, jusqu'à ce ladite couverture la plus proche soit modifiée pour y inclure ladite chacune station avec un premier gain d'antenne, et
($a_{12}$) - production d'une autorisation simulée d'établissement de liaison pour ladite chacune station lorsque l'un des canaux associés à ladite couverture la plus proche est libre, et
($a_2$) - ladite seconde alternative selon laquelle ladite chacune station est localisée dans une couverture de faisceau donnée, comprenant l'une des deux étapes suivantes :
($a_{20}$) - lorsqu'au moins l'un des canaux associés à ladite couverture donnée est libre, production d'une autorisation simulée d'établissement de liaison pour ladite chacune station,
($a_{21}$) - lorsque tous les canaux associés à ladite couverture donnée sont occupés, recherche d'une couverture de faisceau adjacente à ladite chacune station et offrant un canal associé libre, et en réponse à une recherche positive, échange de charge de station entre ladite couverture donnée et ladite couverture adjacente par réduction de la couverture donnée et augmentation de la couverture adjacente, afin que ladite chacune station soit localisée dans la couverture adjacente, et production d'une autorisation simulée d'établissement de liaison pour ladite chacune station, et

(b) - ladite étape finale comprenant lorsque des autorisations d'établissement de liaison simulées sont produites à la fois pour lesdites stations appelante et appelée, transmission d'une autorisation d'émission pour la station appelante, et de valeurs de commande en déphasage et puissance par la station de contrôle vers le satellite afin de reconfigurer lesdits moyens rayonnants dans le satellite selon la simulation réalisée des réductions, augmentations et modifications des couvertures.

Selon une autre caractéristique de l'invention, la première alternative comprend parallèlement auxdites premières étapes :

($a_{10'}$) - détermination parmi toutes lesdites couvertures de faisceau, d'une couverture de plus faible superficie, et
($a_{11'}$) - itérativement, réduction en dimension de chacune des couvertures autres que ladite couverture de plus faible superficie tout en maintenant dans celles-ci des stations qui sont actives précédemment à ladite requête, jusqu'à ce que ladite couverture de plus faible superficie soit augmentée pour y inclure ladite chacune station avec un second gain d'antenne, puis
($a_{12'}$) - sélection de l'une desdites couverture de faisceau de plus faible superficie et couverture de faisceau la plus proche en fonction du plus élevé desdits premier et second gains pour y inclure ladite station dans la couverture sélectionnée, et
($a_{13'}$) - production d'une autorisation simulée d'établissement de liaison pour ladite chacune station lorsque l'un des canaux associés à ladite couverture sélectionnée est libre.

Toutefois, en variante, les deux premières étapes dans la première alternative peuvent être remplacées par les étapes de détermination et réduction ($a_{10'}$) et ($a_{11'}$) énoncées ci-dessus.

La station de contrôle inclut des moyens de traitement numérique de simulation permettant d'effectuer l'ensemble des calculs relatifs aux étapes précitées. Afin de rendre opérationnel le procédé selon l'invention, notamment en terme de temps de simulation par la station de contrôle, les couvertures de faisceau sont mémorisées à chaque instant dans la station de contrôle sous la forme de points discrets associés à des points de contour desdites couvertures, dans un repère transformé défini par :

$$\begin{cases} u = \sin\theta \cos\phi \\ v = \sin\theta \sin\phi \end{cases}$$

où $\theta$ et $\phi$ désignent respectivement des coordonnées angulaires en site et azimut dans un repère sphérique centré sur les moyens rayonnants, c'est-à-dire l'antenne du satellite.

Cette approximation des contours réels des couvertures par des contours polygonaux autorisent des méthodes de calcul avantageuses par la station de contrôle.

Ainsi, selon un premier aspect de ces méthodes de calcul, la détermination d'une couverture la plus proche de ladite chacune station comprend, en outre, une incrémentation d'un coefficient directeur pour définir un faisceau de droites passant par un point associé à ladite chacune station et interceptant des côtés de polygones de couverture, un calcul des distances entre ledit point associé à ladite chacune station et les intersections des droites avec les côtés des polygones, et une sélection de la distance minimale des distances calculées afin de déterminer la couverture dont un côté est le plus proche dudit point associé.

Selon un second aspect des méthodes de calcul, la réduction en dimension d'une desdites autres couvertures peut comprendre, en outre, pour chaque côté d'un polygone associé à ladite autre couverture dans le repère transformé, les sous-étapes énoncées à la revendication 7 ou 8.

L'échange de charge de station entre ladite couverture donnée et ladite couverture adjacente prévue à l'étape $(a_{21})$ comprend de préférence les sous-étapes énoncées dans la revendication 9.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 montre une installation de réseau par satellite incluant en outre un satellite et une pluralité de stations terriennes;
- la figure 2 montre schématiquement une antenne à éléments rayonnants à bord du satellite, alimentée par un réseau à configuration de faisceau;
- la figure 3 montre un repère à coordonnées sphériques lié à l'antenne du satellite utile à une transformation de repère opérée dans le cadre de l'invention;
- la figure 4 est un diagramme de couvertures de faisceaux dans un repère transformé;
- la figure 5 est un algorithme principal de configuration de faisceaux de satellite selon l'invention;
- les figures 6 et 7 sont deux algorithmes relatifs à deux sous-étapes de l'algorithme principal montré à la figure 5 respectivement;
- les figures 8 et 9 sont des diagrammes de couvertures de faisceau dans le repère transformé, en relation respectivement avec la réduction d'une couverture et l'insertion d'une station terrienne dans une couverture de faisceau;
- la figure 10 est un diagramme de couvertures de faisceau en relation avec l'algorithme de la figure 6;

- la figure 11 est un algorithme dépendant de l'algorithme principal montré à la figure 5, et gérant l'échange de capacité entre faisceaux adjacents; et
- la figure 12 est un diagramme de deux couvertures de faisceau en relation avec l'algorithme de la figure 10.

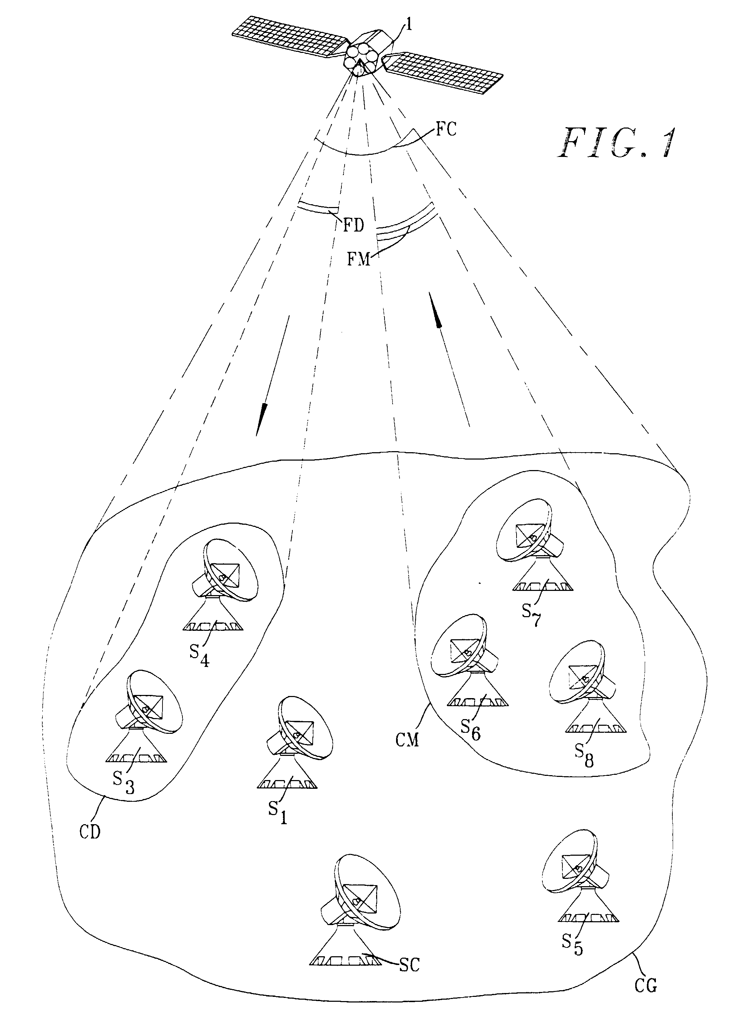

En référence à la figure 1, une installation de réseau satellite pour la mise en oeuvre du procédé selon l'invention comprend un satellite 1, une pluralité de stations terriennes $S_1$ à $S_8$ et une station de contrôle SC. En réception, une antenne du satellite 1 est configurée pour assurer une couverture globale constante CG d'une surface terrestre donnée incluant toutes les stations terriennes $S_1$ à $S_8$ et la station de contrôle SC, grâce à un angle d'ouverture de faisceau FC très ouvert. Une station terrienne quelconque $S_1$ à $S_8$ souhaitant établir une liaison à travers le réseau satellite pour transmettre des informations à une autre station terrienne, émet une requête d'établissement de liaison vers la station de contrôle SC via le satellite 1. Cette requête est supportée par un canal de signalisation du faisceau de réception de couverture globale FC en direction du satellite 1, pour être retransmise vers la station de contrôle SC. En réponse à la requête, la station de contrôle SC élabore, par simulation, de nouvelles couvertures de faisceau du satellite 1, tant en émission qu'en réception, et transmet, par une liaison spécifique, des valeurs de commande de réseaux de conformation de faisceaux pour programmer les couvertures des faisceaux de plusieurs antennes à couverture variable du satellite 1.

A titre d'exemple, en se reportant à la figure 1, il est supposé que la station terrienne $S_5$ doit transmettre des informations vers la station appelée $S_1$ ; il est nécessaire à la fois de reconfigurer, en émission, le faisceau descendant FD dont la couverture d'émission CD n'inclut pas la station $S_5$, et, en réception, le faisceau montant FM dont la couverture de réception CM n'inclut pas la station $S_1$.

Comme il sera montré ci-après, les valeurs de commande des réseaux de conformation de faisceau transmises par la station de contrôle SC commandent, dans le satellite, des déphaseurs et diviseurs de puissance transmettant/recevant des signaux à des/d'éléments rayonnants d'antennes d'émission/de réception du satellite 1, respectivement.

L'invention n'est pas limitée à l'insertion de stations terriennes dans de nouvelles couvertures de faisceau, mais également comprend la réduction des couvertures afin de maintenir un gain d'antenne élevé et donc des liaisons de bonne qualité en terme de taux d'erreur, l'échange de capacité entre couvertures adjacentes afin de remédier à la saturation en capacité d'un faisceau, etc.

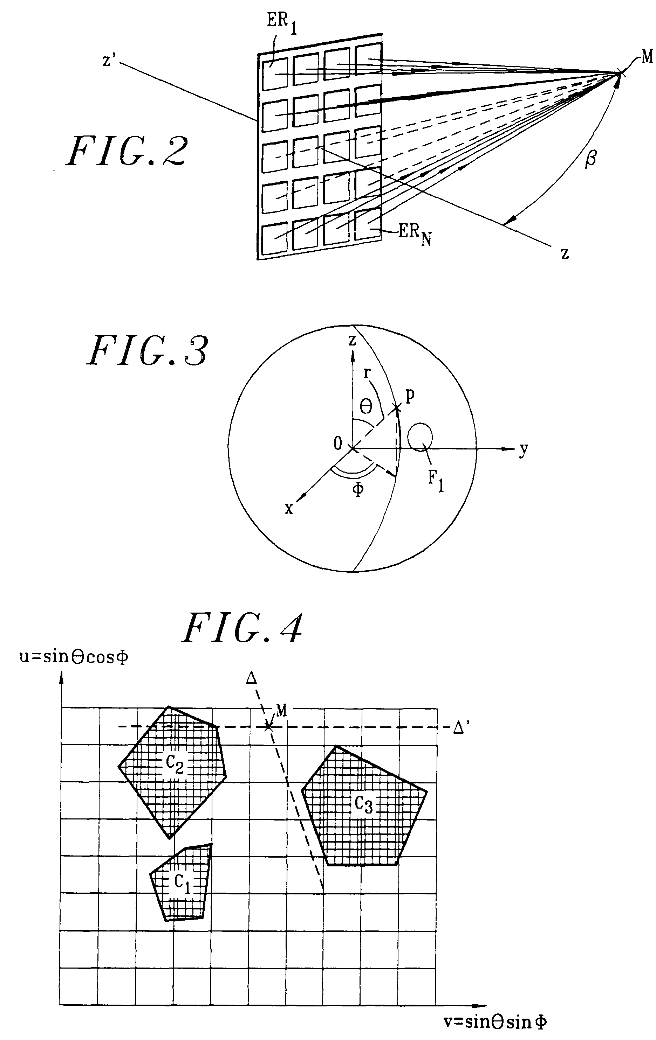

Comme montré schématiquement à la figure 2, une antenne à éléments rayonnants, par exemple de type plaque, comprend une pluralité d'éléments rayonnants $ER_1$ à $ER_N$, pouvant être en nombre très élevé, répartis sur la surface de l'antenne. L'antenne, supposée ici fonctionner en émission, est précédée par un réseau de conformation de faisceau (non représenté). Ce réseau de conformation de faisceau inclut en outre des diviseurs variables de puissance et des déphaseurs variables à micro-onde associés respectivement aux éléments rayonnants et commandés par des moyens de modification d'orientation de faisceau. Par des choix appropriés de déphasages dans les déphaseurs et de répartitions de puissance à travers les diviseurs de puissance sont produits divers diagrammes de rayonnement de l'antenne. Les variations de ces déphasages et répartitions de puissance modifient l'inclinaison du plan de phase par rapport à la surface des éléments rayonnants et le gain de l'antenne, et ainsi l'orientation du faisceau produit par l'antenne et l'ouverture du faisceau. Différents diagrammes de rayonnement sont ainsi obtenus en terme de gain en fonction de l'angle β entre la direction du rayonnement et l'axe z'z de l'antenne.

Les éléments rayonnants sont très faiblement espacés entre eux pour un couplage optimal et, en chaque point M situé à une distance donnée de l'antenne, le rayonnement résulte de la contribution respective de chaque élément rayonnant.

En réception, le principe de fonctionnement de l'antenne est identique : des déphaseurs et diviseurs de puissance sont commandés de manière adéquate pour conférer un gain optimal à l'antenne pour un angle solide donné de l'antenne du satellite 1, définissant un faisceau de réception.

Le principe de fonctionnement des antennes à éléments rayonnants ne sera pas abordé plus en détail, et est supposé connu de l'homme du métier.

De même, le calcul par la station de contrôle SC des valeurs de commande en phase et amplitude des éléments rayonnants des antennes d'émission et de réception en fonction des couvertures de faisceau optimales obtenues par simulation dans le cadre du procédé selon l'invention ne sera pas détaillé. On retiendra néanmoins que la station de contrôle SC inclut des moyens de calcul pour extraire ces valeurs de commande qui sont transmises, via la liaison spécifique, aux réseaux de conformation des faisceaux dans le satellite 1. Des méthodes numériques de calcul de ces valeurs de commande, à partir de couvertures de faisceau souhaitées, sont par exemple, la méthode du min-max et la méthode des moindres carrés.

En référence à la figure 3, il est maintenant fait mention d'une méthode de mémorisation des contours des couvertures de faisceau par la station de contrôle SC. Cette station de contrôle SC doit vérifier, suite à la réception d'une requête et la modification simulée de contours de faisceau comme il sera décrit ci-après, que le gain minimal pour chaque contour de couverture de faisceau est supérieur à un niveau minimal correspondant à une qualité minimale des liaisons pour ledit faisceau. Il n'est pas envisageable qu'un tel calcul de gain minimal soit effectué de manière continue pour la totalité d'un contour de couverture de faisceau. Cette solution conduirait en effet à l'utilisation d'algorithmes complexes et donc à des temps de calcul très longs.

Ainsi, en pratique, d'une manière analogue à des méthodes de représentation de surfaces terrestres par des calculateurs de traitement numérique, la station de contrôle SC mémorise les contours de couvertures de faisceau sous une forme discrète. Ainsi, les calculs de gain sur le contour de couverture de chaque faisceau ne sont effectués que pour un certain nombre de points discrets de ce contour.

A cette fin, un espacement angulaire est choisi pour définir un "pas" entre chaque point discret de la représentation de la couverture. Cet espacement angulaire résulte d'un compromis entre la précision des traitements, ou calculs, effectués sur les contours de couverture et la rapidité de ces traitements par des moyens de traitement numérique dans la station de contrôle SC.

Par ailleurs, à partir de cette représentation discrète de couverture de faisceau, la couverture réelle peut être obtenue en utilisant des algorithmes du type min-max ou des moindres carrés. La couverture réelle permet de déduire les valeurs de commande des réseaux de conformation de faisceaux. Comme montré dans la figure 3, dans un repère cartésien (O, x, y, z) à trois dimensions centré sur une antenne à éléments rayonnants du satellite 1, un point P quelconque de l'espace est repéré par des coordonnées sphériques $(\theta, \phi, r)$. Pour caractériser un faisceau, et donc un angle solide, seules les coordonnées angulaires, site $\theta$ et azimut $\phi$, sont nécessaires. Cependant il est plus avantageux, pour la mémorisation des couvertures des faisceaux par la station centrale SC, de travailler dans un repère cartésien transformé (u, v).

Dans ce repère transformé (u, v), les coordonnées sphériques $(\theta, \phi)$ nécessaires au paramétrage d'un angle solide, ici un faisceau, sont transformées en des coordonnées (u, v) sous la forme :

$$\begin{cases} u = \sin \theta . \cos \phi \\ v = \sin \theta . \cos \phi \end{cases} .$$

De par le caractère bijectif de cette transformation, tout résultat de calcul effectué dans le repère transformé (u,v) est transposable dans le repère à coordonnées sphériques.

Ainsi, dans la station de contrôle SC, chaque contour de couverture de faisceau est mémorisé sous la forme d'une pluralité de points discrets dudit contour dans le repère transformé d'échantillonnage (u, v). Des éléments complémentaires aux notions présentées ci-dessus sont divulgués dans l'article "*Spacecraft multi-beam and contoured-beam antennas*" de P. Balling paru dans Agard Lecture Series LS-151, pages 4-1 à 4-23, 1987.

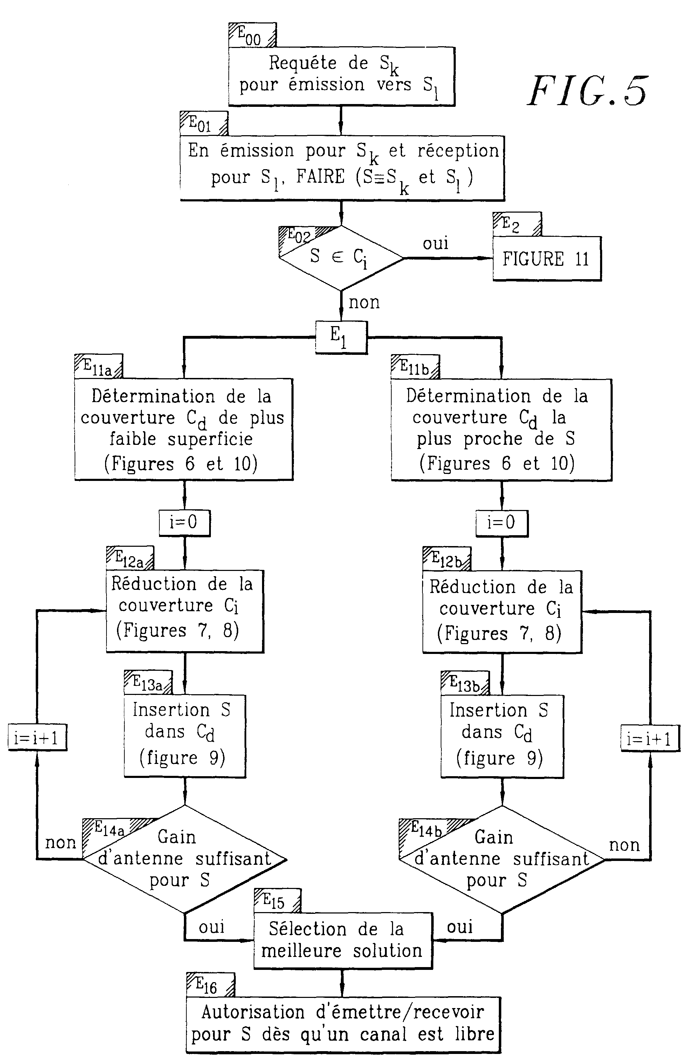

Comme montré à la figure 4, toute couverture de faisceau, de forme sensiblement circulaire au sol est représentée sous une forme discrète dans le repère transformé $(u,v)$ par un contour polygonal fermé $C_1$, $C_2$, $C_3$ représenté par des segments de droite. Chaque contour constitue un contour isogain à l'intérieur duquel le gain est supérieur à un gain minimal garanti correspondant à un taux d'erreur ou une qualité de liaison déterminée.

Les étapes principales du procédé de reconfiguration des couvertures de faisceau de satellite sont maintenant présentées en référence à la figure 5.

Au début d'une étape initiale $E_{O0}$, une station $S_k$ devant établir une liaison avec une station $S_l$ afin de lui transmettre des informations, émet préalablement une requête d'établissement de liaison comprenant en outre son adresse k et l'adresse l de la station terrienne appelée $S_l$. Cette requête, supportée par le canal de signalisation du faisceau de réception de couverture globale CG, est reçue par le satellite 1 et retransmise à la station de contrôle SC. La station de contrôle SC comprend des moyens de simulation pour la mise en oeuvre du procédé selon l'invention, et notamment des moyens pour mémoriser dans le repère $(u,v)$ l'image discrète numérisée de la couverture globale au sol vue du satellite. En réponse à cette requête, la station SC produit une autorisation d'émission, ou bien un rejet, voire une demande de mise en attente de la requête.

Cette réponse est retransmise, via le canal de signalisation, à la station terrienne $S_k$.

Comme signalé précédemment, les réseaux de conformation de faisceau associés aux antennes du satellite 1 sont reconfigurés à la fois en réception pour que la station terrienne appelante $S_k$ soit incluse dans une couverture de réception à gain minimal d'une antenne du satellite 1, et en émission afin que la couverture de faisceau d'émission d'une antenne du satellite 1 recouvre la station appelée avec un gain d'antenne minimal. Ce dernier point est souligné à l'étape $E_{O1}$ de l'algorithme de la figure 5. Ainsi une de deux séries d'étapes suivantes $E_1$ et $E_2$ est effectuée, en simulation par la station SC, pour la station appelante $S_k$ et pour la station appelée $S_l$ respectivement, et l'autorisation d'émettre ou le rejet de la requête est produit par la station SC respectivement selon que la simulation selon l'algorithme de la figure 5 conduit à une autorisation simulée pour les deux stations appelante et appelée $S_k$ et $S_l$, ou à un rejet simulé pour au moins l'une des deux stations $S_k$ et $S_l$. Dans la suite de la description, les deux stations $S_k$ et $S_l$ sont désignées par station S, tout en sachant que les séries de sous étapes suivantes doivent être simulées pour les deux stations $S_k$ et $S_l$, et donner des résultats d'autorisation simulée respectivement pour les deux stations $S_k$ et $S_l$ afin que l'autorisation d'émettre soit transmise par la station de contrôle SC à la station $S_k$.

Dans la station de contrôle SC, les couvertures de tous les faisceaux, tant en émission qu'en réception, du satellite 1 sont mémorisées sous forme discrète telles que présentées dans la figure 4, c'est-à-dire sous la forme de polygones dans le repère transformé $(u,v)$. La position "géographique" dans le repère $(u,v)$, et l'adresse associée de chaque station sont également mémorisées dans la station SC.

Une dernière sous-étape initiale de traitement $E_{O2}$ de l'algorithme consiste à étudier l'appartenance de la station S à une couverture d'émission (lorsque S est appelante) ou de réception (lorsque S est appelée) avec la configuration donnée des réseaux de conformation de faisceau lors de la réception de la requête d'établissement de liaison.

Selon une première alternative (étape E1), la station S n'appartient pas à une couverture de faisceau $C_i$, l'autre alternative étant présentée ultérieurement en référence à la figure 11. Ainsi la station S est, comme les stations $S_1$ ou $S_5$ dans la figure 1, située à l'extérieur d'une couverture de faisceau. Une modification de la couverture de l'un des faisceaux est donc nécessaire pour y inclure la station S. Les couvertures des faisceaux délimitent des zones géographiques terrestres dont les contours définissent des frontières sur lesquelles des liaisons avec le satellite 1 sont garanties avec une qualité minimale en terme de gain d'antenne, ou taux d'erreur en transmission. Ces frontières définissent également des points géographiques où une qualité minimale de liaison avec le satellite 1 est ainsi garantie.

Deux cas sont envisagés selon la présente invention pour le choix de la couverture de faisceau à modifier afin d'inclure la station S : ou bien, selon un premier cas, cette couverture de faisceau est la couverture ayant la plus faible superficie au sol parmi toutes les couvertures des faisceaux du satellite, ou bien, selon un second cas, cette couverture est la couverture la plus proche de la station S. Les deux cas sont traités séparément par la station de contrôle et la solution offrant le gain d'antenne le plus élevé en simulation pour la station S est sélectionnée ( sous-étape $E_{15}$).

Selon le premier cas, le choix de la couverture de plus faible superficie résulte du constat suivant : la couverture de plus faible superficie offre le gain d'antenne le plus élevé et est donc la plus adéquate pour "s'agrandir" afin d'y inclure la station S tout en maintenant un gain d'antenne suffisant. Il est rappelé que chaque faisceau offre un gain d'antenne d'autant plus élevé que l'angle d'ouverture du faisceau est faible. La détermination de la couverture de plus faible superficie s'effectue dans la station de contrôle SC en repérant, dans une représentation du type de celle montrée dans la figure 4, la couverture ayant une couverture géographique minimale par calcul d'aire.

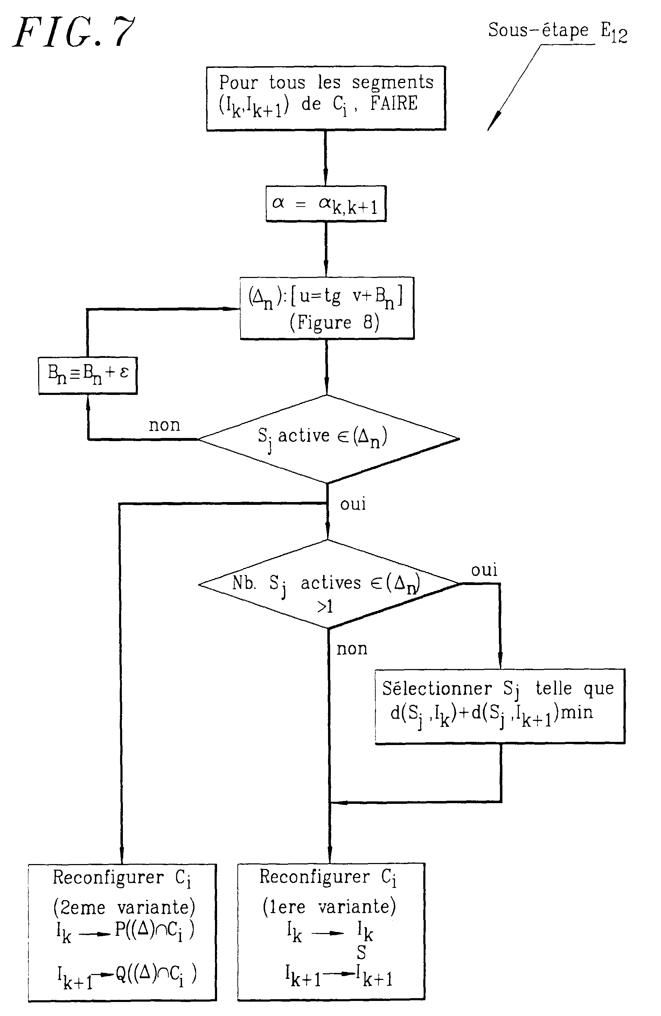

Après la détermination par calcul de la couverture de plus faible superficie $C_d$ (sous-étape $E_{11a}$), itérativement chacune Ci des couvertures, avec $1 \leq i \leq l$ et l désignant le nombre de couvertures de faisceau existantes à l'instant de la requête d'établissement, est réduite selon une méthode (sous-étape $E_{12a}$) décrite en référence à la figure 8, et une modification de la couverture déterminée $C_d$ est simulée pour y inclure la station S au niveau de sa frontière (sous-étape $E_{13a}$). Des réduc-

tions de couvertures de faisceau sont simulées jusqu'à ce qu'une modification de la couverture $C_d$ pour inclure la station S permette d'obtenir un gain d'antenne suffisant au niveau de sa frontière modifiée, et donc de la station S. Dès qu'un gain d'antenne suffisant pour la station S, au niveau de la frontière modifiée de la couverture $C_d$, peut être obtenu après i=L réductions de couverture, un résultat de gain simulé est enregistré.

Selon le second cas, la couverture $C_d$ la plus proche de la station S est d'abord déterminée (sous-étape $E_{11b}$). Puis, de la même façon que dans le premier cas précédent, chacune $C_i$ des couvertures, avec $1 \leq i \leq l$ et $l$ étant le nombre total de couvertures, est réduite (sous-étape $E_{12b}$), et une insertion de la station S dans la couverture déterminée $C_d$ est simulée (sous-étape $E_{13b}$). En fonction du gain obtenu pour la station S, au niveau de la frontière de la couverture modifiée $C_d$ pour l'inclure, d'autres couvertures sont réduites, et les résultats de gain théorique pour la station S dans les couvertures modifiées respectives sont enregistrés. Il est à noter que la réduction, en émission ou en réception, d'une couverture de faisceau du satellite, a pour effet de réduire la puissance utilisée par le satellite pour cette couverture. Compte tenu d'une puissance totale disponible au niveau du satellite, la réduction d'une couverture $C_i$ permet l'agrandissement d'une autre couverture, en l'occurrence $C_d$. Des priorités peuvent être définies pour l'ordre de sélection des couvertures $C_i$ à réduire. Ainsi, par exemple, il peut paraître intéressant de réduire initialement la couverture $C_d$.

Comme indiqué à la sous-étape $E_{15}$ dans la figure 5, en fonction des résultats de gain d'antenne obtenus pour les deux cas, savoir la sélection de la couverture de plus faible superficie et la sélection de la couverture la plus proche de la station S, le cas offrant le plus élevé gain d'antenne théorique pour la station S au voisinage de la frontière de la couverture $C_d$ est retenu. Une autorisation d'émission simulée pour la station S est établi pour la station $S_k$, en sachant qu'à la fois les autorisations simulées en émission et réception doivent être obtenues pour les stations $S_k$ et $S_l$ pour que l'autorisation réelle d'émission soit transmise par la station de contrôle SC.

Les sous-étapes $E_{11a}$ à $E_{14a}$ et $E_{11b}$ à $E_{14b}$, relatives respectivement aux traitements parallèles des deux cas de détermination de couverture $C_d$ sont maintenant détaillées, en introduisant notamment la représentation des couvertures dans le repère transformé (u,v).

Les sous-étapes $E_{11a}$ à $E_{14a}$ relatives au premier cas sont d'abord étudiées.

Il est rappelé que l'étape $E_{11a}$ de détermination de la couverture de plus faible superficie s'effectue dans le repère transformé (u, v) par calcul d'aire.

La réduction d'une quelconque couverture de faisceau $C_i$ lors de la sous-étape $E_{12a}$ est décrite ci-après en référence à la figure 8. Dans le repère transformé (u, v), toute couverture de faisceau est représentée par un polygone, et par exemple la couverture de faisceau représentée dans la figure 8 est délimitée par un polygone ayant six sommets $I_1$, $I_2$, $I_3$, $I_4$, $I_5$ et $I_6$. Pour chaque côté $(I_1, I_2)$, $(I_2, I_3)$,...,$(I_5, I_6)$ et $(I_6, I_1)$ du polygone est déterminé un faisceau de droites paramétrées $(\Delta_o)$ à $(\Delta_n)$ parallèles à ce côté. Ces droites paramétrées ont un même coefficient directeur $Tg\alpha_{4,5}$ et sont déterminées par les équations (figure 7) :

$$u = (Tg\alpha_{4,5}) v + B_n ,$$

où $B_n$ est un paramètre incrémenté d'un pas prédéterminé $\varepsilon$, afin que les droites soient sécantes du polygone en direction de l'intérieur de la surface de couverture. A partir de chaque côté du polygone, la station de contrôle SC sélectionne la première des droites paramétrées incluant une station terrienne active $S_i$ en utilisant la représentation discrète de la couverture $C_i$ mémorisée dans la station de contrôle SC. Dans la figure 8, les stations actives, émettrices lorsque $S=S_k$ ou réceptrices lorsque $S=S_l$, sont désignées par des cercles, tandis que les stations inactives, c'est-à-dire n'émettant ou ne recevant pas, sont désignées par des croix.

Soit par exemple une première station active $S_j$ appartenant à une droite du faisceau de droites parallèles la plus proche du côté $(I_4, I_5)$. Deux variantes sont envisagées dans le cadre de la présente invention pour la réduction de la couverture $C_i$, relativement au côté $(I_4, I_5)$.

Selon une première variante, la couverture $(I_1, I_2, I_3, I_4, I_5, I_6)$ est transformée en $(I_1, I_2, I_3, I_4, S_j, I_5, I_6)$ pour le côté $(I_4, I_5)$. Dans cette représentation discrète des couvertures, il est possible que plusieurs stations $S_j$, telles que deux stations $S_{j1}$ et $S_{j2}$, appartiennent simultanément à une première droite paramétrée du faisceau de droites incluant au moins une station. Pour former le polygone $(I_1, I_2, I_3, I_4, S_j = (S_{j1}$ ou $S_{j2}), I_5, I_6)$ est choisie la station, $S_{j1}$ ou $S_{j2}$ pour laquelle est minimale la somme des distances

$$(d(S_j, I_4) + d(S_j , I_5)),$$

où d désigne l'opérateur distance. Ce polygone réduit correspond à une surface pour laquelle la réduction de couverture est minimale.

Selon une seconde variante, la couverture $(I_1, I_2, I_3, I_4, I_5, I_6)$ est transformée en $(I_1, I_2, I_3, P, Q, I_6)$ relativement au côté $(I_4, I_5)$, où P et Q désignent respectivement deux points d'intersection d'une première droite du faisceau de droites parallèles, incluant au moins une station terrienne active, avec les côtés $(I_3, I_4)$ et $(I_5, I_6)$ adjacents au côté considéré $(I_4, I_5)$.

Les deux sous-étapes $E_{12a}$ et $E_{12b}$ de réduction de couverture de l'algorithme principal de la figure 5, selon les deux variantes, sont résumées dans l'algorithme de la figure 7. Il est à noter qu'une réduction de la couverture d'un faisceau $C_i$ n'est pas réalisée seulement relativement à un côté, tel que le côté ($l_4$, $l_5$), du polygone associé à la couverture dans le repère transformée (u, v) mais également relativement à tous les côtés du polygone. Après ces diverses réductions de polygone en nombre égal au plus au nombre de côtés du polygone, la réduction de couverture du faisceau correspondant, en émission ou en réception, dans le satellite 1 est commandée par la station de contrôle SC en programmant des réseaux de conformation de faisceaux associés à l'antenne correspondante du satellite. Cette programmation est effectuée après que des autorisations simulées d'émission / réception soient obtenues pour la station appelante $S_k$ et la station appelée $S_l$.

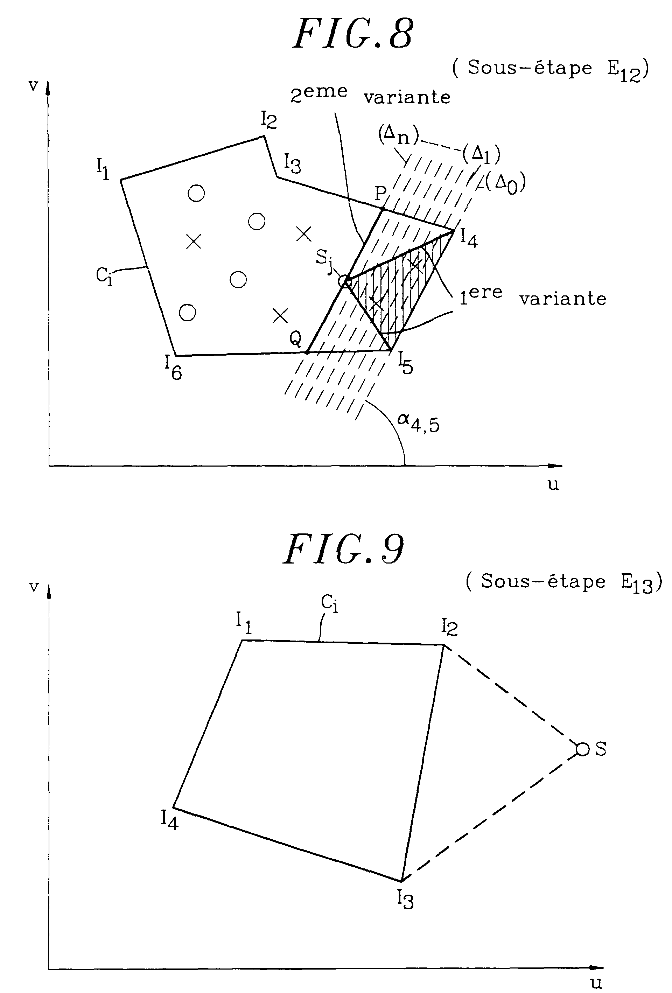

En référence à la figure 9, il est maintenant détaillé la sous-étape $E_{13a}$ d'insertion de la station S dans la couverture déterminée $C_d$, ici de plus faible superficie, par simulation dans la station de contrôle SC. Dans le diagramme de la figure 9, le polygone associé à une couverture de faisceau $C_i$ comprend par exemple quatre sommets $l_1$, $l_2$, $l_3$ et $l_4$. Le début de cette sous-étape d'insertion consiste à déterminer le côté ($l_p$, $l_{p+1}$) le plus proche de la station S, ici ($l_2$, $l_3$). Puis la couverture de faisceau ($l_1$, $l_2$, $l_3$, $l_4$) est modifiée en la couverture ($l_1$, $l_2$, S, $l_3$, $l_4$) dont la surface est augmentée par adjonction du triangle ($l_2$, S, $l_3$), la station S étant la station appelante $S_k$ ou la station appelée $S_l$ à inclure dans le faisceau, en réception ou en émission, d'une antenne du satellite 1.

S'agissant des sous-étapes $E_{11b}$ à $E_{14b}$ de l'algorithme principal, les sous-étapes $E_{12b}$ et $E_{13b}$ sont identiques aux sous-étapes $E_{12a}$ et $E_{13a}$ décrites ci-dessus, et la sous-étape $E_{11b}$ consiste en la détermination, en simulation dans la station de contrôle SC, de la couverture $C_d$ la plus proche de la station S, c'est-à-dire la station $S_k$ ou $S_l$.

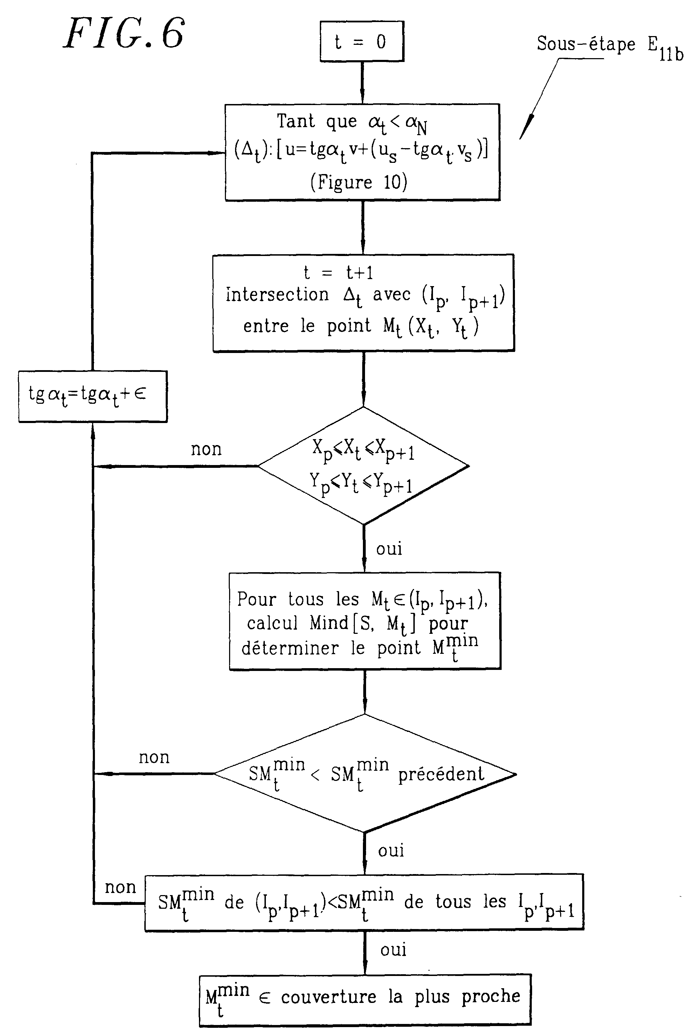

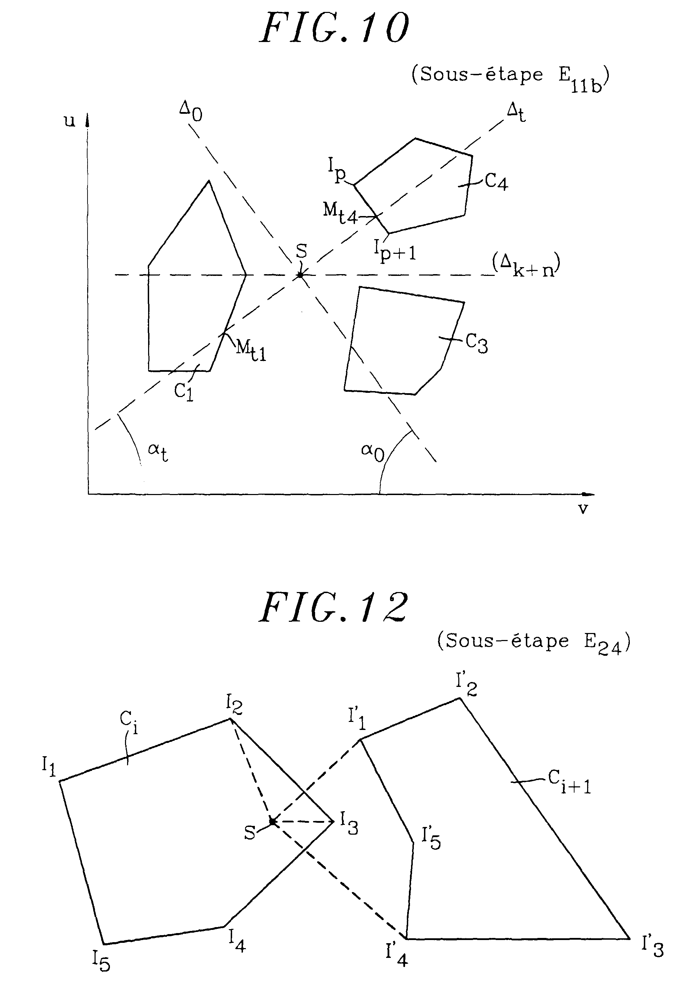

En référence à la figure 10 relative à la sous-étape $E_{11b}$, soit $C_i$ avec i=1, 3 ou 4, la couverture la plus proche d'une station S, station appelante $S_k$ ou appelée $S_l$, devant être modifiée pour y inclure cette station. Un faisceau de droites ($\Delta_t$) passant par S de coordonnées $u_S$ et $v_S$ est déterminé par les équations (figure 6) :

$$u = (tg\alpha_t)v + [u_S - (tg\alpha_t). v_S]$$

en incrémentant discrètement un coefficient directeur $tg\alpha_t$ à partir de celui d'une droite prédéterminée $\Delta_o$ de ce faisceau. Pour chaque droite ($\Delta_t$) est/sont calculé(s) un/des point(s) d'intersection de la droite ($\Delta_t$) avec le/les côté(s) de polygone le/les plus proche(s) de la station S. Ainsi à titre d'exemple, dans la figure 10 la droite ($\Delta_t$) possède deux points d'intersection $M_{t1}$ et $M_{t4}$ avec deux côtés respectifs, tels que ($l_p$, $l_{p+1}$), des polygones associés aux couvertures $C_1$ et $C_4$. Par itérations successives de l'incrémentation du coefficient directeur $tg\alpha_t$ paramétrant le faisceau de droites, et de la recherche de points d'intersection, un ensemble de points :

$$\zeta_{Mt} = \left\{ M_t \in \Delta_k \cap I_p, I_{p+1}) \neq \{\varnothing\} \right\}$$

est obtenu.

Il est ensuite déterminée la distance minimale entre le point associé à la station S et l'un quelconque des points $M_t$. Le côté auquel appartient le point d'intersection $M_t$ à distance minimale de la station S est celui de la couverture de faisceau déterminée en tant que couverture la plus proche de la station S.

L'algorithme de la figure 6 présente les diverses sous-étapes de détermination de la couverture la plus proche de la station S ($E_{11b}$). Dans cet algorithme, la distance minimale est déterminée itérativement pour chaque nouvelle droite paramétrée ($\Delta_t$) par comparaison de la distance du point $M_t$ de cette droite ($\Delta_t$) appartenant à un quelconque segment d'une couverture et la distance minimale jusqu'ici mesurée.

Il n'a été traité jusqu'à présent que de la première alternative selon laquelle la station S, $S_k$ ou $S_l$, n'est pas localisée dans une couverture en émission ou en réception d'une antenne du satellite 1. Comme indiqué par l'étape $E_2$ de l'algorithme principal (figure 5), la seconde alternative selon laquelle la station S est localisée dans une couverture de faisceau $C_i$ est maintenant abordée en référence à la figure 11.

Il est supposé que des bandes de fréquence sont dédiées respectivement aux faisceaux du satellite 1, et que chacun des faisceaux supporte des canaux en nombre prédéterminés NC, par exemple des canaux multiplexés en fréquence ou résultant de tout autre type de multiplexage.

Comme signalé à la sous-étape $E_{21}$ dans la figure 11, la station de contrôle SC vérifie la disponibilité des NC canaux de la couverture $C_i$ couvrant la station S. Si au moins l'un des NC canaux est libre pour la couverture $C_i$, c'est-à-dire si une porteuse de modulation associée à la couverture $C_i$ peut-être utilisée en réception ou en émission par la station S, alors une autorisation simulée est accordée à la station S. Il est rappelé que l'autorisation réelle d'émission/réception est conditionnée dans la station de contrôle SC par des autorisations simulées, à la fois relatives à la station appelante $S_k$ et la station appelée $S_l$.

Lorsque tous les NC canaux de la couverture $C_i$ sont occupés, la station de contrôle recherche parmi des couvertures adjacentes à la couverture $C_i$ incluant la station S, l'une de celles dont le faisceau supporte un canal libre. Cette recherche est effectuée selon un ordre de priorité prédéterminé des couvertures adjacentes et/ou de préférence en sélectionnant la couverture ayant le plus faible nombre de canaux occupés. Deux couvertures de faisceaux sont dites "adjacentes" lorsque leur séparation angulaire est telle qu'il n'existe aucune couverture intercalée entr'elles.

Si aucune des couvertures examinées adjacentes à la couverture $C_i$ ne possède au moins un canal libre, alors la requête d'établissement de la station S est rejetée ou mise en attente dans une file d'attente de station dans la station SC. Que la station S soit la station appelante $S_k$ ou la station appelée $S_l$, la liaison entre les deux stations $S_k$ et $S_l$ n'est pas alors établie.

Si une première couverture adjacente à la couverture $C_i$ et incluant au moins un canal libre est décelée, il est alors procédé à une sous-étape d'échange des charges des faisceaux de ces couvertures, comme indiqué en $E_{24}$ dans la figure 11.

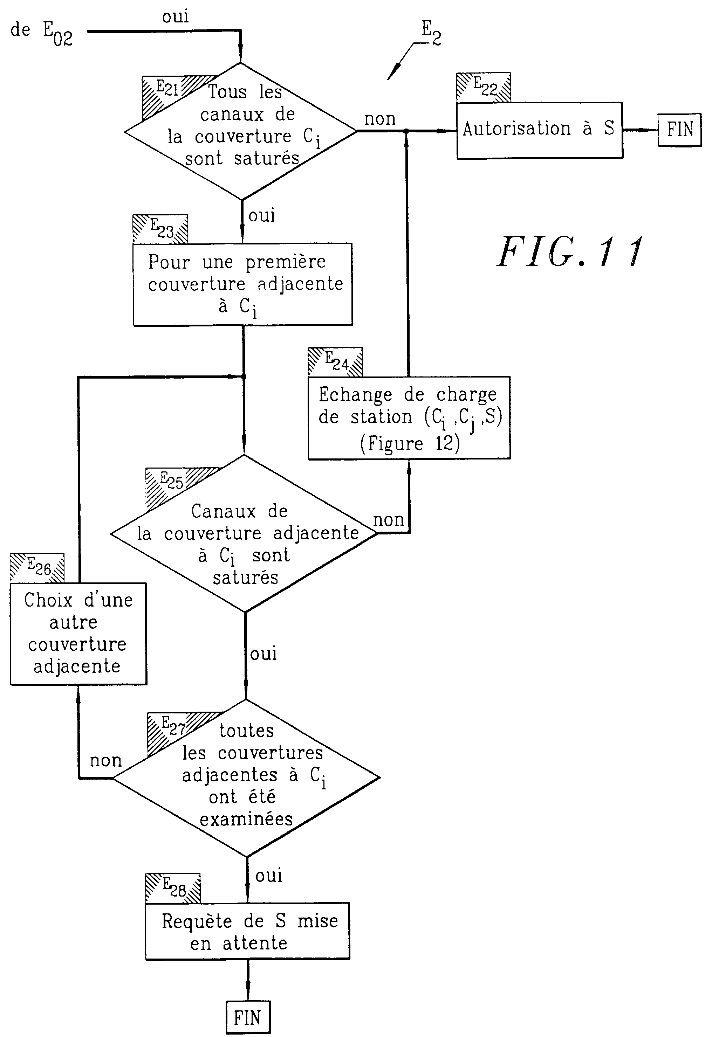

Cette sous-étape d'échange de charges entre faisceaux est représentée graphiquement dans la figure 12. Selon cette figure 12, soit $C_i$ la couverture de faisceau incluant initialement la station S et ayant tous ses canaux occupés, et $C_{i+1}$ une couverture adjacente à la couverture $C_i$ et ayant au moins un canal libre, ces deux couvertures étant délimitées initialement par des contours polygonaux en trait plein.

Tout d'abord, dans le repère transformé (u,v) est déterminé le côté ($I_p$, $I_{p+1}$) du polygone de la couverture $C_i$ le plus proche de la station S. Ce côté est de préférence déterminé de la même manière que dans la sous-étape $E_{11b}$, en utilisant un faisceau de droites à coefficient directeur incrémenté. Dans la figure 12, ce côté de la couverture $C_i$ est ($I_2$, $I_3$). Puis la couverture $C_i$ est réduite en joignant les deux sommets $I_2$ et $I_3$ de ce côté au point de la station S de sorte que le côté ($I_2$, $I_3$) est remplacé par les deux côtés ($I_2$, S) et (S, $I_3$), comme représenté en trait discontinu dans la figure 12. Toutefois, la réduction de la couverture $C_i$ peut être accomplie selon la seconde variante montrée à la figure 8 pour laquelle le côté ($I_2$, $I_3$) est remplacé par un côté (P,Q) parallèle à celui-ci et passant par le point S.

Ensuite, pour la couverture $C_{i+1}$ adjacente à la couverture $C_i$ et possédant au moins un canal libre, sont déterminés les deux côtés du polygone délimitant la couverture $C_{i+1}$, les plus proches de la station S. Comme précédemment à la sous-étape $E_{11b}$, cette détermination est réalisée au moyen d'un faisceau de droites passant par S, de coefficient directeur incrémenté. Dans la figure 12, ces deux côtés de la couverture $C_{i+1}$ sont ($I'_4$, $I'_5$) et ($I'_5$, $I'_1$). Puis la couverture $C_{i+1}$ est agrandie afin d'y inclure la station S, en joignant les deux sommets extrêmes $I'_1$ et $I'_4$ de ces deux côtés ($I'_4$, $I'_5$) et ($I'_5$, $I'_1$) au point de la station S, de manière à constituer deux côtés ($I'_4$, S) et (S, $I'_1$), comme représenté en trait discontinu dans la figure 12. Ainsi la station S est incluse dans la couverture $C_{i+1}$ modifiée, et un canal libre du faisceau de cette couverture $C_{i+1}$ est alloué par la station de contrôle SC à la station S pour une émission ou réception.

Simultanément, l'adresse de la station S est retirée de la mémoire d'allocation de canaux dans la station SC associée à la couverture $C_i$, et cette couverture $C_i$ couvrant initialement la station S est réduite en commandant une diminution de puissance d'émission ou de réception de l'antenne du satellite 1 desservant la couverture $C_i$, par modification des coefficients de commande des déphaseurs et diviseurs de puissance du réseau de configuration de cette antenne selon la couverture $C_i$ ainsi définie.

Ainsi l'invention fournit un procédé original de reconfiguration de faisceaux de satellite, en tenant compte de la puissance limitée, en émission et en réception, du satellite, et fait appel à l'utilisation de points discrets pour chaque contour de faisceau dans le repère transformé (u, v) simplifiant considérablement certaines étapes ou sous-étapes du procédé.

**Revendications**

1. Procédé pour reconfigurer des couvertures de faisceau radioélectrique d'un satellite (1) retransmettant des télécommunications échangées entre des stations terriennes émettrices-réceptrices,

en modifiant des valeurs de commande en déphasage et puissance de moyens conformateurs de faisceau associés respectivement à des moyens rayonnants desdits faisceaux dans le satellite (1), à la fois en réception pour des télécommunications transmises par des stations terriennes vers le satellite et en émission pour des télécommunications retransmises par le satellite vers des stations terriennes, des canaux de télécommunications en nombre prédéterminé étant associés à chacune desdites couvertures de faisceau,
pour l'établissement d'une liaison de télécommunications entre l'une appelante ($S_k$) desdites stations et une autre appelée ($S_l$) desdites stations via le satellite (1),
ledit procédé étant précédé par la transmission d'une requête d'établissement de ladite liaison de ladite station appelante ($S_k$) vers une station de contrôle (SC), via un canal de signalisation du satellite,
ledit procédé étant caractérisé en ce qu'il comprend, en simulation dans la station de contrôle (SC), l'une de première et seconde alternatives séparément pour chacune (S) desdites stations appelante et appelée ($S_k$, $S_l$), puis une étape finale;

($a_1$) - ladite première alternative ($E_1$) selon laquelle ladite chacune station (S) n'est localisée dans aucune des couvertures de faisceau, comprenant les premières étapes suivantes :
($a_{10}$) - détermination ($E_{11b}$) parmi toutes lesdites couvertures de faisceau, d'une couverture ($C_d$) la plus proche de ladite chacune station (S),
($a_{11}$) - itérativement, réduction en dimension ($E_{12b}$, $E_{13b}$) de chacune des couvertures ($C_i$) autres que ladite couverture la plus proche ($C_i$),

jusqu'à ce ladite couverture la plus proche ($C_d$) soit modifiée pour y inclure ladite chacune station (S) avec un premier gain d'antenne, et

($a_{12}$) - production ($E_{16}$) d'une autorisation simulée d'établissement de liaison pour ladite chacune station (S) lorsque l'un des canaux associés à ladite couverture la plus proche est libre, et

($a_2$) - ladite seconde alternative ($E_2$) selon laquelle ladite chacune station (S) est localisée dans une couverture de faisceau donnée ($C_i$), comprenant l'une des deux étapes suivantes :

($a_{20}$) - lorsqu'au moins l'un des canaux associés à ladite couverture donnée est libre, production ($E_{22}$) d'une autorisation simulée d'établissement de liaison pour ladite chacune station (S),

($a_{21}$) - lorsque tous les canaux associés à ladite couverture donnée ($C_i$) sont occupés ($E_{23}$), recherche ($E_{25}$) d'une couverture de faisceau adjacente à ladite chacune station (S) et offrant un canal associé libre, et en réponse à une recherche positive, échange de charge de station entre ladite couverture donnée ($C_i$) et ladite couverture adjacente ($C_{i+1}$) par réduction de la couverture donnée et augmentation de la couverture adjacente, afin que ladite chacune station soit localisée dans la couverture adjacente, et production d'une autorisation simulée d'établissement de liaison pour ladite chacune station (S), et

(b) - ladite étape finale comprenant lorsque des autorisations d'établissement de liaison simulées sont produites à la fois pour lesdites stations appelante ($S_k$) et appelée ($S_l$), transmission d'une autorisation d'émission pour la station appelante ($S_k$) et de valeurs de commande en déphasage et puissance par la station de contrôle (SC) vers le satellite (1) afin de reconfigurer lesdits moyens rayonnants dans le satellite (1) selon la simulation réalisée des réductions, augmentations et modifications des couvertures.

2. Procédé conforme à la revendication 1, caractérisé en ce que ladite première alternative comprend parallèlement auxdites premières étapes :

($a_{10'}$) - détermination ($E_{11a}$) parmi toutes lesdites couvertures de faisceau, d'une couverture de plus faible superficie (Cd),

($a_{11'}$) - itérativement, réduction en dimension ($E_{12a}$, $E_{13a}$) de chacune des couvertures ($C_i$) autres que ladite couverture de plus faible superficie tout en maintenant dans celles-ci des stations qui sont actives précédemment à ladite requête, jusqu'à ce que ladite couverture de plus faible superficie ($C_d$) soit augmentée pour y inclure ladite chacune station (S) avec un second gain d'antenne, puis

($a_{12'}$) - sélection ($E_{15}$) de l'une desdites couverture de faisceau de plus faible superficie et couverture de faisceau la plus proche en fonction du plus élevé desdits premier et second gains pour y inclure ladite station (S) dans la couverture sélectionnée, et

($a_{13'}$) - production ($E_{16}$) d'une autorisation simulée d'établissement de liaison pour ladite chacune station (S) lorsque l'un des canaux associés à ladite couverture sélectionnée est libre.

3. Procédé conforme à la revendication 1, caractérisé en ce que ladite première alternative comprend en remplacement desdites premières étapes :

($a_{10'}$) - détermination ($E_{11a}$) parmi toutes lesdites couvertures de faisceau, d'une couverture de plus faible superficie ($C_d$),

($a_{11'}$) - itérativement, réduction en dimension ($E_{12a}$, $E_{13a}$) de chacune des couvertures ($C_i$) autres que ladite couverture de plus faible superficie tout en maintenant dans celles-ci des stations qui sont actives précédemment à ladite requête, jusqu'à ce que ladite couverture de plus faible superficie ($C_d$) soit augmentée pour y inclure ladite chacune station (S) avec un second gain d'antenne, et

($a_{13}$) - production ($E_{16}$) d'une autorisation simulée d'établissement de liaison pour ladite chacune station (S) lorsque l'un des canaux associés à ladite couverture de plus faible superficie est libre.

4. Procédé conforme à l'une quelconque des revendications 1 à 3, caractérisé en ce que lesdites réductions des couvertures dans ladite première alternative s'effectuent selon un ordre de priorité prédéterminé.

5. Procédé conforme à l'une quelconque des revendications 1 à 4, caractérisé en ce que, à chaque instant, les couvertures de faisceau sont mémorisées dans la station de contrôle (SC) sous la forme de points discrets associés à des points de contour desdites couvertures, dans un repère transformé (u, v) défini par :

$$\begin{cases} u = \sin\theta\cos\phi \\ v = \sin\theta\sin\phi \end{cases}$$

où $\theta$ et $\phi$ désignent respectivement des coordonnées angulaires en site et azimut dans un repère sphérique centré sur les moyens rayonnants du satellite (1).

6.   Procédé conforme à la revendication 5, caractérisé en ce que ladite détermination ($E_{11b}$) d'une couverture la plus proche ($C_d$) de ladite chacune station (S) comprend, en outre, une incrémentation d'un coefficient directeur ($tg\alpha_t$) pour définir un faisceau de droites ($\Delta_t$) passant par un point associé à ladite chacune station (S) et interceptant des côtés de polygones de couverture, un calcul des distances entre ledit point associé à ladite chacune station (S) et les intersections des droites avec les côtés des polygones, et une sélection de la distance minimale des distances calculées afin de déterminer la couverture dont un côté est le plus proche dudit point associé.

7.   Procédé conforme à la revendication 5 ou 6, caractérisé en ce que ladite réduction en dimension ($E_{12}$) d'une desdites autres couvertures de faisceau comprend, en outre, pour chaque côté ($I_4$, $I_5$) d'un polygone associé à ladite autre couverture dans le repère transformé (u,v), une incrémentation d'un paramètre ($B_n$) pour définir un faisceau de droites ($\Delta_n$) parallèles audit côté, et la détermination d'un point d'intersection associé à une première station active ($S_j$) localisée dans ladite autre couverture avec un segment de droite dudit faisceau afin que ledit segment de droite (PQ) constitue un côté du polygone de ladite autre couverture réduite.

8.   Procédé conforme à la revendication 5 ou 6, caractérisé en ce que ladite réduction en dimension ($E_{12}$) d'une desdites autres couvertures de faisceau comprend en outre, pour chaque côté ($I_4$, $I_5$) d'un polygone associé à ladite autre couverture dans le repère transformé (u, v), une incrémentation d'un paramètre ($B_n$) pour définir un faisceau de droites parallèles ($\Delta_n$) audit côté, la détermination d'au moins un point d'intersection associé à au moins une première station active ($S_j$), localisée dans ladite autre couverture, avec une droite dudit faisceau, et jonction dudit point d'intersection déterminé associé à une première station active avec les deux extrémités dudit côté afin de former deux côtés ($I_4 S_j$, $S_j I_5$) de ladite couverture réduite, ledit point d'intersection déterminé désignant un point pour lequel la somme des distances aux deux extrémités dudit côté est sensiblement minimale.

9.   Procédé conforme à l'une quelconque des revendications 5 à 8, caractérisé en ce que l'échange de charge de station entre ladite couverture donnée ($C_i$) et ladite couverture adjacente ($C_{i+1}$) comprend la détermination d'un premier côté ($I_2 I_3$) d'un polygone associé à la couverture donnée le plus proche de la station (S), la réduction de la couverture donnée en remplaçant ledit premier côté ($I_2 I_3$) par deux

côtés ($I_2S$; $SI_3$) joignant les extrémités dudit premier côté à un point associé à la station, la détermination de deux seconds côtés ($I'_1 I'_5$, $I'_5 I'_4$) de la couverture adjacente les plus proches de la station (S), et l'agrandissement de ladite couverture adjacente par remplacement des deux seconds côtés par deux côtés ($I'_1 S$, $SI'_4$) joignant les extrémités opposées des deux seconds côtés au point associé à ladite station (S).

**Patentansprüche**

1.   Verfahren zum Rekonfigurieren von Bestrahlungsfeldern radioelektrischer Strählen eines Satelliten (1), der zwischen Sender-Empfänger-Bodenstationen ausgetauschte Fernmeldungen weiterleitet,

durch Verändern von Steuerwerten der Phasenverschiebung und Leistung von Strahlformereinrichtungen, die jeweils strahlenden Einrichtungen besagter Strählen im Satelliten (1) zugeordnet sind, sowohl beim Empfang bei von Bodenstationen zum Satelliten übertragenen Fernmeldungen als auch beim Senden bei vom Satelliten zu Bodenstationen weitergeleiteten Fernmeldungen, wobei Fernmeldekanäle in vorgegebener Anzahl jedem der besagten Bestrahlungsfelder zugeordnet sind,
zum Herstellen einer Fernmeldeverbindung zwischen einer anrufenden ($S_k$) der Stationen und einer anderen, angerufenen ($S_1$) der Stationen über den Satelliten (1),
wobei vor dem Verfahren eine Anfrage zum Herstellen der Verbindung von der anrufenden Station ($S_k$) zu einer Steuerstation (SC) über einen Signalkanal des Satelliten übertragen wird,

dadurch gekennzeichnet, daß es als Simulation in der Steuerstation (SC) eine erste und eine zweite Alternative getrennt für jede der anrufenden und angerufenen Stationen ($S_k$, $S_l$) und dann einen Endschritt umfaßt; wobei

($a_1$) - die erste Alternative ($E_1$), bei der jede Station (S) in keinem der Bestrahlungsfelder liegt, folgende Schritte umfaßt:
($a_{10}$) - bestimmen ($E_{11b}$), unter allen Bestrahlungsfeldern, eines jeder Station (S) am nächsten liegenden Bestrahlungs-feldes ($C_d$),
($a_{11}$) - iteratives Verringern der Ausdehnung ($E_{12b}$, $E_{13b}$) jedes Bestrahlungsfeldes ($C_i$) mit Ausnahme des am nächsten liegenden Bestrahlungsfeldes ($C_i$), bis das am nächsten liegende Bestrahlungsfeld ($C_d$) so verändert ist, daß jede Station (S) mit einer ersten Antennenverstärkung darin liegt, und

$(a_{12})$ - Erzeugen $(E_{16})$ einer simulierten Erlaubnis zum Herstellen einer Verbindung für jede Station (S), wenn einer der dem am nächsten liegendem Bestrahlungsfeld zugeordneten Kanäle frei ist, und

$(a_2)$ - die zweite Alternative $(E_2)$, bei der jede Station (S) in einem gegebenen Bestrahlungsfeld $(C_i)$ liegt, einen der zwei folgenden Schritte umfaßt:

$(a_{20})$ - wenn wenigstens einer der dem gegebenen Bestrahlungsfeld zugeordneten Kanäle frei ist, erzeugen $(E_{22})$ einer simulierten Erlaubnis zum Herstellen der Verbindung für jede Station (S),

$(a_{21})$ - wenn alle dem gegebenen Bestrahlungsfeld $(C_i)$ zugeordneten Kanäle belegt sind $(E_{23})$, Suchen $(E_{25})$ eines Bestrahlungsfeldes, das jeder Station (S) benachbart ist und einen freien zugeordneten Kanal bietet, und, bei erfolgreicher Suche, Stationszuständigkeitsaustausch zwischen dem gegebenen Bestrahlungsfeld $(C_i)$ und dem benachbartem Bestrahlungsfeld $(C_{i+1})$ durch Verkleinern des gegebenen Bestrahlungsfeldes und Vergrößern des benachbarten Bestrahlungsfeldes, so daß jede Station in dem benachbarten Bestrahlungsfeld liegt, und Erzeugen einer simulierten Erlaubnis zum Herstellen der Verbindung für jede Station (S), und

(b) - der Endschritt, wenn simulierte Erlaubnisse zum Herstellen einer Verbindung sowohl für die anrufende Station $(S_k)$ als auch die angerufene Station $(S_1)$ erzeugt sind, Übertragen einer Sendeerlaubnis für die anrufende Station $(S_k)$ und von Phasenverschiebungs- und Leistungssteuerwerten durch die Steuerstation (SC) zum Satelliten (1), um die strahlende Einrichtungen im Satelliten (1) gemäß der durchgeführten Simulation der Verkleinerungen Vergrößerungen und Veränderungen der Bestrahlungsfelder zu rekonfigurieren.

2.  Verfahren nach Anspruch 1, dadurch gekennzeichnet, daß die erste Alternative parallel zu den ersten Schritten umfaßt:

    $(a_{10})$ - bestimmen $(E_{11a})$ unter allen Bestrahlungsfeldern, eines Bestrahlungsfeldes mit kleinster Oberfläche $(C_d)$,
    $(a_{11})$ - iteratives Verkleinern der Ausdehnung $(E_{12a}, E_{13a})$ jedes Bestrahlungsfeldes $(C_i)$ mit Ausnahme des Bestrahlungsfeldes mit kleinster Oberfläche unter Beibehaltung in denjenigen der Stationen, die vor der Anfrage aktiv sind, bis das Bestrahlungsfeld mit kleinster Oberfläche $(C_d)$ so vergrößert ist, daß jede Station (S) mit einer zweiten Antennenverstärkung darin liegt, dann

$(a_{12'})$ - Auswählen $(E_{15})$ eines der Bestrahlungsfelder mit der kleinsten Oberfläche und dem am nächsten liegenden Bestrahlungsfeld in Abhängigkeit von der höheren von der ersten und der zweiten Verstärkung, so daß die Station (S) in dem ausgewählten Bestrahlungsfeld liegt, und

$(a_{13'})$ - Erzeugen $(E_{16})$ einer similierten Erlaubnis zum Herstellen einer Verbindung für jede Station (S), wenn einer der dem ausgewählten Bestrahlungsfeld zugeordneten Kanäle frei ist.

3.  Verfahren nach Anspruch 1, dadurch gekennzeichnet, daß die erste Alternative als Ersatz für die ersten Schritte umfaßt:

    $(a_{10'})$ - Bestimmen $(E_{11a})$, unter allen Bestrahlungsfeldern, eines Bestrahlungsfeldes mit kleinster Oberfläche $(C_d)$,
    $(a_{11'})$ - iteratives Verringern der Ausdehnung $(E_{12a}, E_{13a})$ jedes Bestrahlungsfeldes $(C_i)$ mit Ausnahme des Bestrahlungsfeldes mit kleinster Oberfläche unter Beibehaltung in diesen der Stationen, die vor der Anfrage aktiv sind, bis das Bestrahlungsfeld mit kleinster Oberfläche $(C_d)$ so vergrößert ist, daß jede Station (S) mit einer zweiten Antennenverstärkung darin liegt, und
    $(a_{13})$ - Erzeugen $(E_{16})$ einer simulierten Erlaubnis zum Herstellen einer Verbindung für jede Station (S), wenn einer der dem Bestrahlungsfeld mit kleinster Oberfläche zugeordneten Kanäle frei ist.

4.  Verfahren nach einem der Ansprüche 1 bis 3, dadurch gekennzeichnet, daß die Verkleinerungen der Bestrahlungsfelder bei der ersten Alternative gemäß einer vorbestimmten Prioritätsreihenfolge stattfinden.

5.  Verfahren nach einem der Ansprüche 1 bis 4, dadurch gekennzeichnet, daß zu jedem Zeitpunkt die Bestrahlungsfelder in der Steuerstation (SC) in Form von diskreten, Umrißpunkten der Bestrahlungsfelder zugeordneten Punkten in einem transformierten Koordinatensystem (u, v) gespeichert sind, das definiert ist durch:

$$u = \sin \theta \cos \Phi$$

$$v = \sin \theta \sin \Phi,$$

wobei $\theta$ und $\Phi$ jeweils Zenit- und Azimut-Winkelkoordinaten in einem sphärischen Koordinatensystem bezeichnen, das auf die strahlenden Einrichtungen des Satelliten (1) zentriert ist.

6. Verfahren nach Anspruch 5, dadurch gekennzeichnet, daß die Bestimmung ($E_{11b}$) eines jeden Station (S) am nächsten liegenden Bestrahlungsfelds ($C_d$) ferner umfaßt: eine Inkrementierung eines Richtkoeffizienten (tan $\alpha_t$) zum Definieren eines Geradenbündels ($\Delta_t$), das durch einen jeder Station (S) zugeordneten Punkt verläuft und Seiten von Bestrahlungsfeld-Vielecken schneidet, eine Berechnung der Abstände zwischen dem der Station (S) zugeordneten Punkt und den Schnittpunkten der Geraden mit den Seiten der Vielecke und ein Auswählen des kleinsten Abstands unter den berechneten Abständen, um das Bestrahlungsfeld zu bestimmen, das eine dem zugeordneten Punkt am nächsten liegende Seite hat.

7. Verfahren nach Anspruch 5 oder 6, dadurch gekennzeichnet, daß die Ausdehnungsverkleinerung ($E_{12}$) eines der anderen Strahlungsfelder ferner für jede Seite ($l_4$, $l_5$) eines dem anderen Bestrahlungsfeld in dem transformierten Koordinatensystem (u, v) zugeordneten Vielecks umfaßt: eine Inkrementierung eines Parameters ($B_n$) zum Definieren eines zu der Seite parallelen Geradenbündels ($\Delta_n$) und die Bestimmung eines einer in dem anderen Bestrahlungsfeld liegenden ersten aktiven Station ($S_j$) mit einem Geradenstück des Bündels zugeordneten Schnittpunkts, so daß das Geradenstück (PQ) eine Seite des Vielecks des verkleinerten anderen Bestrahlungsfeldes bildet.

8. Verfahren nach Anspruch 5 oder 6, dadurch gekennzeichnet, daß die Ausdehnungsverkleinerung ($E_{12}$) eines der anderen Bestrahlungsfelder ferner für jede Seite ($l_4$, $l_5$) eines dem anderen Bestrahlungsfeld in dem transformierten Koordinatensystem (u, v) zugeordneten Vielecks umfaßt: eine Inkrementierung eines Parameters ($B_n$) zum Definieren eines zu der Seite parallelen Geradenbündels ($\Delta_n$), die Bestimmung wenigstens eines wenigstens einer ersten in dem anderen Bestrahlungsfeld liegenden aktiven Station ($S_j$) mit einer Geraden des Bündels zugeordneten Schnittpunkts und das Verbinden des einer ersten aktiven Station zugeordneten Schnittpunkts mit den zwei Enden der Seite, um zwei Selten ($l_4 S_j$, $S_j l_5$) des Verkleinerten Bestrahlungsfeldes zu bilden, wobei der bestimmte Schnittpunkt einen Punkt bezeichnet, für den die Summe der Abstände zu den zwei Enden der Seite im wesentlichen minimal ist.

9. Verfahren nach einem der Anprüche 5 bis 8, dadurch gekennzeichnet, daß der Stationszuständigkeitsaustausch zwischen dem gegebenen Bestrahlungsfeld ($C_i$) und dem benachbarten Bestrahlungsfeld ($C_{i+1}$) umfaßt: des Bestimmen einer ersten Seite ($l_2 l_3$) eines dem gegebenen, der Station (S) am nächsten liegenden Bestrahlungsfeld zugeordneten Vielecks, das Verkleinern des gegebenen Bestrahlungsfeldes durch Ersetzen der ersten Seite ($l_2 l_3$) durch zwei Seiten ($l_2$ S; S $l_3$), die die Enden der ersten Seite mit einem der Station zugeordneten Punkt verbinden, das bestimmen von zwei der Station (S) am nächsten liegenden zweiten Seiten [$l'_1 l'_5$, $l'_5 l'_4$] des benachbarten Bestrahlungsfeldes und das Vergrößern des benachbarten Bestrahlungsfeldes durch Ersetzen der zwei zweiten Seiten durch zwei Seiten ($l'_1$ S, S $l'_4$), die die gegenüberliegenden Enden der zwei zweiten Seiten mit dem der Station (S) zugeordneten Punkt verbinden.

## Claims

1. A method for reconfiguring coverages of respective beams in a satellite (1) re-transmitting telecommunications exchanged between earth emitting-receiving stations,

by modifying phase shift and power control values of beam-forming means associated respectively to radiating means of said beams in the satellite (1), both on receiving for telecommunications emitted by the earth stations to the satellite and on emitting for telecommunications to be re-emitted by the satellite to the earth stations, predetermined numbers of telecommunication channels being associated to said beam coverages,
to set up a telecommunication link between calling one ($S_k$) of said stations and called one ($S_l$) of said stations via the satellite (1),
said method being preceded by the transmission of a request for setting-up said link from said calling station ($S_k$) to a control station (CS), via a signalling channel of the satellite,
said method being characterized in that it comprises, by simulation in the control station (CS), one of first and second alternatives separately for each (S) of said calling and called stations ($S_k$, $S_1$), then a final step,

($a_1$)- said first alternative ($E_1$) wherein said each station (S) is not located in any one of the beam coverages, comprising the first following steps of :
($a_{10}$) - determining ($E_{11b}$) amongst all said beam coverages, a coverage ($C_d$) nearest to said each station (S),
($a_{11}$) - iteratively, reducing in size ($E_{12b}$, $E_{13b}$) each of the coverages ($C_i$) other than said nearest coverage ($C_i$), until said nearest coverage ($C_d$) is modified to include said each station (S) with a first antenna gain therein, and
($a_{12}$)- deriving ($E_{16}$) a simulated link setting-up authorization for said each station (S) when one of the channels associated to said nearest coverage is free, and

(a2)- said second alternative ($E_2$) wherein said each station (S) is located in a given beam coverage ($C_i$), comprising one of the two following steps of,

(a20) - when at least one of the channels associated to said given coverage is free, deriving ($E_{22}$) a simulated link setting-up authorization for said each station (S),

(a21)- when all the channels associated to said given coverage ($C_i$) are busy ($E_{23}$), searching ($E_{25}$) a beam coverage adjacent to said each station (S) and having a associated free channel, and in response to a searching having a positive result, exchanging of station load between said given coverage ($C_i$) and said adjacent coverage ($C_{i+1}$) by reducing of the given coverage and increasing of the adjacent coverage, so that said each station is located in the adjacent coverage, and deriving a simulated link setting-up authorization for said each station (S), and

(b)- said final step comprising, when simulated link setting-up authorizations are derived both for said calling ($S_k$) and called ($S_l$) stations, emitting an emission authorization for the calling station ($S_k$) and phase shift and power control values from the control station (SC) to the satellite (1) to reconfigure said radiating means in the satellite (1) according to the realized simulation of reducing, increasing and modifying the coverages.

2. A method according to claim 1, characterized in that said first alternative comprises parallel to said first steps :

($a_{10'}$) - determining ($E_{11a}$) amongst all said beam coverages, a lowermost surface coverage ($C_d$),

($a_{11'}$)- iteratively, reducing in size ($E_{12a}$, $E_{13a}$) each of the coverages ($C_i$) other than said lowermost surface coverage whilst maintaining in these coverages stations which are active prior to said request, until said lowermost surface coverage ($C_d$) is increased to include said each station (S) with a second antenna gain therein, then

($a_{12'}$) - selecting ($E_{15}$) one of said lowermost surface beam coverage and nearest beam coverage as a function of the higher of said first and second antenna gains to include said station (S) in the selected coverage, and

($a_{13'}$) - deriving ($E16$) a simulated link setting-up authorization for said each station (S) when one of the channels associated to said selected coverage is free.

3. A method according to the claim 1, characterized in that said first alternative comprises in replacement of said first steps :

($a_{10'}$) - determining ($E_{11a}$) amongst all said coverages, a lowermost surface coverage ($C_d$),

($a_{11'}$) - iteratively, reducing in size ($E_{12a}$, $E_{13a}$) each of said coverages ($C_i$) other than said lowermost surface coverage whilst maintaining in said coverages stations which are active prior to said request, until said lowermost surface coverage ($C_d$) is increased to include said each station (S) with a second antenna gain therein, and

($a_{13}$) - deriving ($E_{16}$) a simulated link setting-up autorization for said each station (S) when one of the channels associated to said lowermost surface coverage is free.

4. A method according to any one of claims 1 to 3, characterized in that said coverages reducing steps in said first alternative take place according to a predetermined order of priority.

5. A method according to any one of claims 1 to 4, characterized in that, at each time, the beam coverages are memorized in the control station (SC) in the form of discrete points associated to contour points of said coverages, in a transformed reference system (u, v) defined by :

$$u = \sin \theta \cos \phi$$

$$v = \sin \theta \sin e\ \phi$$

in which $\theta$ and $\phi$ respectively designate elevation and azimuth coordinates in a spherical reference system centered on the radiating means of the satellite (1).

6. A method according to the claim 5, characterized in that said step of determining ($E_{11b}$) a coverage ($C_d$) nearest to said each station (S) further comprises the steps of incrementing a director coefficient ($tg\alpha_t$) to define a sheaf of straight lines ($\Delta_t$) passing through a point associated to said each station (S) and intercepting sides of coverage polygons, computing distances between said point associated to said each station (S) and the intersection points of the straight lines with the sides of the polygons, and selecting a minimum distance from the computed distances thereby determining a coverage whose a side is nearest to said associated point.

7. A method according to the claim 5 or 6, characterized in that said step of reducing in size ($E_{12}$) one

of said other beam coverages further comprises, for each side ($I_4$, $I_5$) of a polygon associated to said other coverage in the transformed reference system (u, v), the steps of incrementing a parameter ($B_n$) to define a sheaf of straight lines ($\Delta_n$) parallel to said side, and determinating a intersection point associated to a first active station ($S_j$) which is located in said other coverage, with a straight line segment of said sheaf so that said straight line segment (PQ) forms a side of the polygon of said other reduced coverage.

8. A method according to the claim 5 or 6, characterized in that said step of reducing in size ($E_{12}$) one of said other beam coverages further comprises, for each side ($I_4$, $I_5$) of a polygon associated to said other coverage in the transformed reference system (u, v), the steps of incrementing a parameter ($B_n$) to define a sheaf of straight lines ($\Delta_n$) parallel to said side, determinating at least one intersection point associated to at least one first active station ($S_j$), which is located in said other coverage, with a straight line of said sheaf, and joining said determinated intersection point associated to a first active station with two far ends of said side thereby forming in two sides ($I_4 S_j$, $S_j I_5$) of said reduced coverage, said intersection point designating a point for which a sum of distances between the two far ends of said side is substantially minimum.

9. A method according to any one of the claims 5 to 8, characterized in that the station load exchanging step between said given coverage ($C_i$) and said adjacent coverage ($C_{i+1}$) comprises the steps of determinating a first side ($I_2 I_3$) of a polygon associated to the given coverage nearest to the station (S), the steps of reducing of the given coverage by replacing said first side ($I_2 I_3$) by two sides ($I_2 S$; $SI_3$) joining far ends of said first side to a point associated to the station, determinating two second sides ($I'_1 I'_5$, $I'_5 I'_4$) of the adjacent coverage nearest to the station (S), and enlarging of said adjacent coverage by replacing the two second sides by two sides ($I'_1 S$, $SI'_4$) joining opposing far ends of the two second sides to the point associated to said station (S).

FIG.1

*FIG.2*

*FIG.3*

*FIG.4*

$u = \sin\theta\cos\phi$

$v = \sin\theta\sin\phi$

*FIG.5*

$E_{00}$

Requête de $S_k$
pour émission vers $S_l$

$E_{01}$

En émission pour $S_k$ et réception
pour $S_l$, FAIRE ($S \equiv S_k$ et $S_l$)

$E_{02}$

$S \in C_l$ — oui → $E_2$ : FIGURE 11

non

$E_1$

$E_{11a}$

Détermination de la
couverture $C_d$ de plus
faible superficie
(Figures 6 et 10)

i=0

$E_{12a}$

Réduction de la
couverture $C_i$
(Figures 7, 8)

$E_{13a}$

Insertion S
dans $C_d$
(figure 9)

$E_{14a}$ Gain
d'antenne suffisant
pour S

non — i=i+1

oui

$E_{11b}$

Détermination de la
couverture $C_d$ la
plus proche de S
(Figures 6 et 10)

i=0

$E_{12b}$

Réduction de la
couverture $C_i$
(Figures 7, 8)

$E_{13b}$

Insertion S
dans $C_d$
(figure 9)

$E_{14b}$ Gain
d'antenne suffisant
pour S

non — i=i+1

oui

$E_{15}$

Sélection de la
meilleure solution

$E_{16}$

Autorisation d'émettre/recevoir
pour S dès qu'un canal est libre

*FIG.6*

Sous-étape $E_{11b}$

$$t = 0$$

Tant que $\alpha_t < \alpha_N$
$(\Delta_t): [u = tg\alpha_t v + (u_s - tg\alpha_t v_s)]$
(Figure 10)

$t = t+1$
intersection $\Delta_t$ avec $(I_p, I_{p+1})$
entre le point $M_t(X_t, Y_t)$

$tg\alpha_t = tg\alpha_t + \epsilon$

non — $\begin{array}{c} X_p \leqslant X_t \leqslant X_{p+1} \\ Y_p \leqslant Y_t \leqslant Y_{p+1} \end{array}$

oui

Pour tous les $M_t \in (I_p, I_{p+1})$,
calcul Mind$[S, M_t]$ pour
déterminer le point $M_t^{min}$

non — $SM_t^{min} < SM_t^{min}$ précédent

oui

non — $SM_t^{min}$ de $(I_p, I_{p+1}) < SM_t^{min}$ de tous les $I_p, I_{p+1}$

oui

$M_t^{min} \in$ couverture la plus proche

# *FIG. 7*

Sous-étape $E_{12}$

Pour tous les segments
$(I_k, I_{k+1})$ de $C_i$, FAIRE

$\alpha = \alpha_{k,k+1}$

$(\Delta_n) : [\, u = tg\ v + B_n \,]$
(Figure 8)

$B_n \equiv B_n + \varepsilon$

non ⟶ $S_j$ active $\in (\Delta_n)$

oui

Nb. $S_j$ actives $\in (\Delta_n)$
$> 1$    oui

non

Sélectionner $S_j$ telle que
$d(S_j, I_k) + d(S_j, I_{k+1}) \, min$

Reconfigurer $C_i$

(2eme variante)

$I_k \longrightarrow P((\Delta) \cap C_i)$

$I_{k+1} \longrightarrow Q((\Delta) \cap C_i)$

Reconfigurer $C_i$

(1ere variante)

$I_k \longrightarrow I_k$
$S$
$I_{k+1} \longrightarrow I_{k+1}$

# FIG.8

( Sous-étape $E_{12}$)

# FIG.9

( Sous-étape $E_{13}$)

# FIG.10

(Sous-étape $E_{11b}$)

# FIG.12

(Sous-étape $E_{24}$)

de $E_{02}$ — oui

$E_2$

$E_{21}$ Tous les canaux de la couverture $C_i$ sont saturés — non — $E_{22}$ Autorisation à S — FIN

*FIG.11*

oui

$E_{23}$ Pour une première couverture adjacente à $C_i$

$E_{24}$ Echange de charge de station $(C_i, C_j, S)$ (Figure 12)

$E_{25}$ Canaux de la couverture adjacente à $C_i$ sont saturés — non

$E_{26}$ Choix d'une autre couverture adjacente

oui

$E_{27}$ toutes les couvertures adjacentes à $C_i$ ont été examinées

non

oui

$E_{28}$ Requète de S mise en attente

FIN

23